# EUROPEAN PATENT APPLICATION

(11) **EP 4 699 874 A1**
(43) Date of publication of application: **25.02.2026**
(21) Application number: 25161762.7
(22) Date of filing: 05.03.2025
(51) Int. Cl.: B60T 7/04, B60T 13/66, B60T 13/68, B60T 13/74

(54) **APPARATUS AND METHOD FOR CONTROLLING RESIDUAL PRESSURE IN ELECTRONIC STABILITY CONTROL-INTEGRATED BRAKING SYSTEM**

(30) Priority: 19.08.2024 KR 20240110850
(71) Applicant: Hyundai Mobis Co., Ltd., Gangnam-gu Seoul 06141 (KR)
(72) Inventor: SEO, Jae Won, Yongin-si, Gyeonggi-do 16891 (KR); SEOL, Yong Cheol, Yongin-si, Gyeonggi-do 16891 (KR)
(74) Representative: Jung, Minkyu

(57) **Abstract**

Disclosed are an apparatus and a method for controlling residual pressure in an electronic stability control (ESC)-integrated braking system. The apparatus for controlling residual pressure in an ESC-integrated braking system of the present disclosure includes: a master cylinder configured to generate braking hydraulic pressure through a master piston; hydraulic regulating valves configured to regulate hydraulic pressure, wherein the hydraulic regulating valves are provided in a hydraulic flow path connecting between a reserve and wheel cylinders configured to perform braking of each wheel; and a processor configured to: adjust a position of the master piston of the master cylinder depending on whether the master cylinder satisfies a preset residual pressure control initiation condition; and control the hydraulic regulating valves based on a required pressure and a circuit pressure of the master cylinder.

## Description

### BACKGROUND

### FIELD

Exemplary embodiments of the present disclosure relate to an apparatus and a method for controlling residual pressure in an electronic stability control (ESC)-integrated braking system.

### DISCUSSION OF THE BACKGROUND

An electronic stability control (ESC)-integrated braking system refers to a system including ESC, which may apply active braking to a conventional brake system (CBS).

The ESC-integrated braking system ensures vehicle stability by operating functions such as an anti-lock brake system (ABS), vehicle dynamics control (VDC), and a traction control system (TCS) when vehicle stability decreases during driving.

The ESC-integrated braking system may be provided with: a booster and a master cylinder that generate braking pressure by a the driver's brake pedal operation force; a motor pump that enables braking pressure to be generated independently of the driver's brake pedal operation; and a traction control valve (TCV) and a high pressure switch valve (HSV) that use the braking pressure from the motor pump to adjust a braking state of wheels independently of the driver's braking operation.

With the ESC-integrated braking system, residual pressure is generated within the system due to hydraulic control using inlet and outlet valves, or functional failure.

The related art of the present disclosure is disclosed in Korean Patent Application Publication No. 10-2023-0140882 (published on October 10, 2023 and entitled "ELECTRIC BRAKE SYSTEM AND CONTROL METHOD THEREOF").

### SUMMARY

According to an aspect of the present disclosure, there are provided an apparatus and a method for controlling residual pressure in an electronic stability control (ESC)-integrated braking system, which may prevent vehicle brake slippage and reduce operational noise by enhancing pressure control precision when residual pressure occurs.

An apparatus for controlling residual pressure in the ESC-integrated braking system according to an aspect of the present disclosure includes: a master cylinder configured to generate braking hydraulic pressure through a master piston; hydraulic regulating valves configured to regulate hydraulic pressure, wherein the hydraulic regulating valves are provided in a hydraulic flow path connecting between a reserve and wheel cylinders configured to perform braking of each wheel; and a processor configured to: control a position of the master piston of the master cylinder depending on whether the master cylinder satisfies a preset residual pressure control initiation condition; and control the hydraulic regulating valves based on a required pressure and a circuit pressure of the master cylinder.

The processor according to an embodiment of the present disclosure is configured to determine that the residual pressure control initiation condition is satisfied if the required pressure of the master cylinder exceeds a reference value, the position of the master piston is an origin position, and the circuit pressure of the master cylinder exceeds the required pressure of the master cylinder.

The processor of the present disclosure is configured to move the position of the master piston to a preset set position.

The preset set position of the present disclosure is an initial position of the master piston.

The processor of the present disclosure is configured to compare the required pressure and the circuit pressure of the master cylinder and, based on the comparison result, control a position of a piston of the master cylinder.

The processor of the present disclosure is configured to move the master cylinder forward if the required pressure of the master cylinder exceeds the circuit pressure of the master cylinder; and maintain the master cylinder at a current position if the required pressure of the master cylinder is at or below the circuit pressure of the master cylinder.

The hydraulic regulating valves of the present disclosure include a fifth hydraulic regulating valve provided in a hydraulic flow path connecting between a fourth chamber of the master cylinder and the wheel cylinders and regulate the hydraulic pressure, and the processor is configured to control the fifth hydraulic regulating valve.

The processor of the present disclosure is configured to: sum a pressure feedback control duty corresponding to a pressure difference between the required pressure and the circuit pressure of the master cylinder with a feedforward duty corresponding to the required pressure of the master cylinder; and, based on the summed duty, control the fifth hydraulic regulating valve.

The processor of the present disclosure is configured to terminate the residual pressure control and perform general pressure control if the required pressure of the master cylinder is at an increased level, and a pressure difference between the required pressure and the circuit pressure of the master cylinder is at or above a preset first set value, or if an expected pressure of the master cylinder corresponding to the position of the master piston and the circuit pressure of the master cylinder exceed a preset second set value.

A method for controlling residual pressure in an ESC-integrated braking system of the present disclosure includes: determining, by a processor, whether a master cylinder satisfies a preset residual pressure control condition; adjusting, by the processor, a position of a master piston of the master cylinder depending on the determination result; and controlling, by the processor, hydraulic regulating valves based on a required pressure and a circuit pressure of the master cylinder.

In the present disclosure, in said determining whether a preset residual pressure control condition is satisfied, the processor is configured to determine that the residual pressure control initiation condition is satisfied if the required pressure of the master cylinder exceeds a reference value, the position of the master piston is an origin position, and the circuit pressure of the master cylinder exceeds the required pressure of the master cylinder.

In the present disclosure, in said controlling a position of a master piston of the master cylinder, the processor is configured to move the position of the master piston to a preset set position.

The preset set position of the present disclosure is an initial position of the master piston.

In the present disclosure, in said controlling a position of a master piston of the master cylinder, the processor is configured to compare the required pressure and the circuit pressure of the master piston and, based on the comparison result, control a position of a piston of the master cylinder.

In the present disclosure, in said adjusting, a position of a master piston of the master cylinder, the processor is configured to move the master cylinder forward if the required pressure of the master cylinder exceeds the circuit pressure of the master cylinder; and maintain the master cylinder at a current position if the required pressure of the master cylinder is at or below the circuit pressure of the master cylinder.

The hydraulic regulating valves of the present disclosure include a fifth hydraulic regulating valve provided in a hydraulic flow path connecting between a fourth chamber of the master cylinder and the wheel cylinders and regulate the hydraulic pressure, and in said controlling hydraulic regulating valves, the processor is configured to control the fifth hydraulic regulating valve.

In the present disclosure, in said controlling hydraulic regulating valves, the processor is configured to: sum a pressure feedback control duty corresponding to a pressure difference between the required pressure and the circuit pressure of the master cylinder with a feedforward duty corresponding to the required pressure of the master cylinder; and, based on the summed duty, control the fifth hydraulic regulating valve.

In the present disclosure, in said controlling hydraulic regulating valves, the processor is configured to terminate the residual pressure control and perform general pressure control if the required pressure of the master cylinder is at an increased level, and a pressure difference between the required pressure and the circuit pressure of the master cylinder is at or above a preset first set value, or if an expected pressure of the master cylinder corresponding to the position of the master piston and the circuit pressure of the master cylinder exceed a preset second set value.

The apparatus and the method for controlling residual pressure in the ESC-integrated braking system according to an aspect of the present disclosure prevent vehicle brake slippage and reduce operational noise by enhancing pressure control precision when residual pressure occurs in the ESC-integrated braking system.

The apparatus and the method for controlling residual pressure in the ESC-integrated braking system according to another aspect of the present disclosure enhance a driver's perceived braking quality and enhance control reliability and stability.

### BRIEF DESCRIPTION OF THE DRAWINGS

FIG. 1 is a hydraulic circuit diagram of an electronic stability control (ESC)-integrated braking system according to an embodiment of the present disclosure.
FIG. 2 is a flowchart of a method for controlling residual pressure in the ESC-integrated braking system according to an embodiment of the present disclosure.
FIG. 3 is a diagram illustrating an effect of the apparatus and the method for controlling residual pressure in the ESC-integrated braking system according to an embodiment of the present disclosure.

### DETAILED DESCRIPTION OF THE ILLUSTRATED EMBODIMENTS

The components described in the example embodiments may be implemented by hardware components including, for example, at least one digital signal processor (DSP), a processor, a controller, an application-specific integrated circuit (ASIC), a programmable logic element, such as an FPGA, other electronic devices, or combinations thereof. At least some of the functions or the processes described in the example embodiments may be implemented by software, and the software may be recorded on a recording medium. The components, the functions, and the processes described in the example embodiments may be implemented by a combination of hardware and software.

The method according to example embodiments may be embodied as a program that is executable by a computer, and may be implemented as various recording media such as a magnetic storage medium, an optical reading medium, and a digital storage medium.

Various techniques described herein may be implemented as digital electronic circuitry, or as computer hardware, firmware, software, or combinations thereof. The techniques may be implemented as a computer program product, i.e., a computer program tangibly embodied in an information carrier, e.g., in a machine-readable storage device (for example, a computer-readable medium) or in a propagated signal for processing by, or to control an operation of a data processing apparatus, e.g., a programmable processor, a computer, or multiple computers. A computer program(s) may be written in any form of a programming language, including compiled or interpreted languages and may be deployed in any form including a stand-alone program or a module, a component, a subroutine, or other units suitable for use in a computing environment. A computer program may be deployed to be executed on one computer or on multiple computers at one site or distributed across multiple sites and interconnected by a communication network.

Processors suitable for execution of a computer program include, by way of example, both general and special purpose microprocessors, and any one or more processors of any kind of digital computer. Generally, a processor will receive instructions and data from a read-only memory or a random access memory or both. Elements of a computer may include at least one processor to execute instructions and one or more memory devices to store instructions and data. Generally, a computer will also include or be coupled to receive data from, transfer data to, or perform both on one or more mass storage devices to store data, e.g., magnetic, magneto-optical disks, or optical disks. Examples of information carriers suitable for embodying computer program instructions and data include semiconductor memory devices, for example, magnetic media such as a hard disk, a floppy disk, and a magnetic tape, optical media such as a compact disk read only memory (CD-ROM), a digital video disk (DVD), etc. and magneto-optical media such as a floptical disk, and a read only memory (ROM), a random access memory (RAM), a flash memory, an erasable programmable ROM (EPROM), and an electrically erasable programmable ROM (EEPROM) and any other known computer readable medium. A processor and a memory may be supplemented by, or integrated into, a special purpose logic circuit.

The processor may run an operating system (OS) and one or more software applications that run on the OS. The processor device also may access, store, manipulate, process, and create data in response to execution of the software. For purpose of simplicity, the description of a processor device is used as singular; however, one skilled in the art will be appreciated that a processor device may include multiple processing elements and/or multiple types of processing elements. For example, a processor device may include multiple processors or a processor and a controller. In addition, different processing configurations are possible, such as parallel processors.

Also, non-transitory computer-readable media may be any available media that may be accessed by a computer, and may include both computer storage media and transmission media.

The present specification includes details of a number of specific implements, but it should be understood that the details do not limit any invention or what is claimable in the specification but rather describe features of the specific example embodiment. Features described in the specification in the context of individual example embodiments may be implemented as a combination in a single example embodiment. In contrast, various features described in the specification in the context of a single example embodiment may be implemented in multiple example embodiments individually or in an appropriate sub-combination. Furthermore, the features may operate in a specific combination and may be initially described as claimed in the combination, but one or more features may be excluded from the claimed combination in some cases, and the claimed combination may be changed into a sub-combination or a modification of a sub-combination.

Similarly, even though operations are described in a specific order on the drawings, it should not be understood as the operations needing to be performed in the specific order or in sequence to obtain desired results or as all the operations needing to be performed. In a specific case, multitasking and parallel processing may be advantageous. In addition, it should not be understood as requiring a separation of various apparatus components in the above described example embodiments in all example embodiments, and it should be understood that the above-described program components and apparatuses may be incorporated into a single software product or may be packaged in multiple software products.

It should be understood that the example embodiments disclosed herein are merely illustrative and are not intended to limit the scope of the invention. It will be apparent to one of ordinary skill in the art that various modifications of the example embodiments may be made without departing from the spirit and scope of the claims and their equivalents.

Hereinafter, with reference to the accompanying drawings, embodiments of the present disclosure will be described in detail so that a person skilled in the art can readily carry out the present disclosure. However, the present disclosure may be embodied in many different forms and is not limited to the embodiments described herein.

In the following description of the embodiments of the present disclosure, a detailed description of known functions and configurations incorporated herein will be omitted when it may make the subject matter of the present disclosure rather unclear. Parts not related to the description of the present disclosure in the drawings are omitted, and like parts are denoted by similar reference numerals.

In the present disclosure, components that are distinguished from each other are intended to clearly illustrate each feature. However, it does not necessarily mean that the components are separate. That is, a plurality of components may be integrated into one hardware or software unit, or a single component may be distributed into a plurality of hardware or software units. Thus, unless otherwise noted, such integrated or distributed embodiments are also included within the scope of the present disclosure.

In the present disclosure, components described in the various embodiments are not necessarily essential components, and some may be optional components. Accordingly, embodiments consisting of a subset of the components described in one embodiment are also included within the scope of the present disclosure. In addition, embodiments that include other components in addition to the components described in the various embodiments are also included in the scope of the present disclosure.

Hereinafter, with reference to the accompanying drawings, embodiments of the present disclosure will be described in detail so that a person skilled in the art can readily carry out the present disclosure. However, the present disclosure may be embodied in many different forms and is not limited to the embodiments described herein.

In the following description of the embodiments of the present disclosure, a detailed description of known functions and configurations incorporated herein will be omitted when it may make the subject matter of the present disclosure rather unclear. Parts not related to the description of the present disclosure in the drawings are omitted, and like parts are denoted by similar reference numerals.

In the present disclosure, when a component is referred to as being "linked," "coupled," or "connected" to another component, it is understood that not only a direct connection relationship but also an indirect connection relationship through an intermediate component may also be included. In addition, when a component is referred to as "comprising" or "having" another component, it may mean further inclusion of another component not the exclusion thereof, unless explicitly described to the contrary.

In the present disclosure, the terms first, second, etc. are used only for the purpose of distinguishing one component from another, and do not limit the order or importance of components, etc., unless specifically stated otherwise. Thus, within the scope of this disclosure, a first component in one exemplary embodiment may be referred to as a second component in another embodiment, and similarly a second component in one exemplary embodiment may be referred to as a first component.

In the present disclosure, components that are distinguished from each other are intended to clearly illustrate each feature. However, it does not necessarily mean that the components are separate. That is, a plurality of components may be integrated into one hardware or software unit, or a single component may be distributed into a plurality of hardware or software units. Thus, unless otherwise noted, such integrated or distributed embodiments are also included within the scope of the present disclosure.

In the present disclosure, components described in the various embodiments are not necessarily essential components, and some may be optional components. Accordingly, embodiments consisting of a subset of the components described in one embodiment are also included within the scope of the present disclosure. In addition, exemplary embodiments that include other components in addition to the components described in the various embodiments are also included in the scope of the present disclosure.

Hereinafter, an apparatus and a method for controlling residual pressure in an electronic stability control (ESC)-integrated braking system according to an embodiment of the present disclosure will be described in detail with reference to the accompanying drawings.

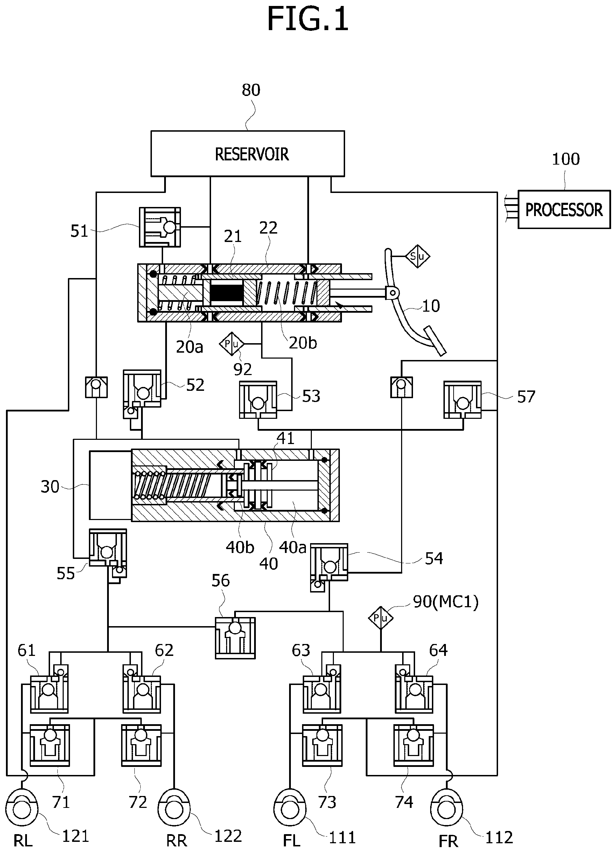

FIG. 1 is a hydraulic circuit diagram of an ESC-integrated braking system according to an embodiment of the present disclosure.

Referring to FIG. 1, the apparatus for controlling in the ESC-integrated braking system according to the present embodiment may include a reservoir 80, a pedal cylinder 20, a motor 30, a master cylinder 40, wheel cylinders 111, 112, 121, and 122, hydraulic regulating valves 51, 52, 53, 54, 55, 56, and 57, and a processor 100.

The reservoir 80 may be coupled to an upper portion of the pedal cylinder 20 to store oil. The reservoir 80 may include a reservoir liquid level sensor Lu.

The pedal cylinder 20 may generate hydraulic pressure by pressurizing a brake pedal 10.

The pedal cylinder 20 may include a pedal cylinder portion 22 and a pedal simulator 21, and may form two chambers 20a and 20b. For example, the pedal cylinder 20 may be provided with the first chamber 20a and the second chamber 20b.

When a driver's pedal effort is applied to the brake pedal 10, hydraulic pressure may be generated by the pedal cylinder 20. The generated hydraulic pressure may be supplied to a piston of the pedal simulator 21 to pressurize an elastic element of the pedal simulator 21. The driver's pedal feel may be implemented by a reaction force of the pressurized elastic element.

The motor 30 may be operated by an electrical signal output in response to displacement of the brake pedal 10.

The processor 100 may receive a rotation detection signal of the brake pedal 10 and control driving of the motor 30.

The master cylinder 40 may generate hydraulic pressure in response to the driving of the motor 30 and supply the generated hydraulic pressure to the wheel cylinders 111, 112, 121, and 122 configured to perform braking of wheels RR, RL, FR, and FL, respectively. For example, when the driver presses the brake pedal 10, a pedal stroke sensor Su may detect a stroke of the brake pedal 10 and transmit the stroke to the processor 100. The processor 100 controls the hydraulic pressure generated in the master cylinder 40 by controlling the motor 30 based on the displacement of the brake pedal 10 detected by the pedal stroke sensor Su. In this case, the motor 30 may operate under the control of the processor 100 to generate braking hydraulic pressure based on signals output from the pedal stroke sensor Su and the pedal cylinder pressure sensor 92, respectively, when the brake pedal 10 is pressurized.

The master cylinder 40 may include a master piston 41, and may form two chambers 40a and 40b. The master cylinder 40 may be provided with the third chamber 40a and the fourth chamber 40b.

The wheel cylinders 111, 112, 121, and 122 may include the first wheel cylinder 111 configured to brake the front left wheel FL of a vehicle, the second wheel cylinder 112 configured to brake the front right wheel FR of the vehicle, the third wheel cylinder 121 configured to brake the rear left wheel RL of the vehicle, and the fourth wheel cylinder 122 configured to brake the rear right wheel RR of the vehicle.

Inlet valves 61 to 64 may throttle brake oil supplied to the wheel cylinders 111, 112, 121, and 122, respectively.

Outlet valves 71, 72, 73, and 74 may throttle brake oil discharged from the wheel cylinders 111, 112, 121, and 122, respectively, in the hydraulic flow path between each of the wheel cylinders 111, 112, 121, and 122 and the reservoir 80.

The first to seventh hydraulic regulating valves 51, 52, 53, 54, 55, 56, and 57 are provided in the hydraulic flow path, and may be opened and closed under the control of the processor 100.

The first hydraulic regulating valve 51 is provided in the hydraulic flow path connecting between the reservoir 80 and the first chamber 20a of the pedal cylinder 20, and may be opened and closed to regulate the hydraulic pressure under the control of the processor 100.

The second hydraulic regulating valve 52 is provided in the hydraulic flow path connecting between the first chamber 20a of the pedal cylinder 20 and the fourth chamber 40b of the master cylinder 40, and may be opened and closed to regulate the hydraulic pressure under the control of the processor 100.

The third hydraulic regulating valve 53 is provided in the hydraulic flow path connecting between the second chamber 20b of the pedal cylinder 20 and the third chamber 40a of the master cylinder 40, and may be opened and closed to regulate the hydraulic pressure under the control of the processor 100.

The fourth hydraulic regulating valve 54 is provided in the hydraulic flow path connecting between the third chamber 40a of the master cylinder 40 and the wheel cylinders, and may be opened and closed to regulate the hydraulic pressure under the control of the processor 100.

The fifth hydraulic regulating valve 55 is provided in the hydraulic flow path connecting between the fourth chamber 40b of the master cylinder 40 and the wheel cylinders, and may be opened and closed to regulate the hydraulic pressure under the control of the processor 100.

The sixth hydraulic regulating valve 56 (or split shut-off valve) is provided in the hydraulic flow path connecting between the fourth hydraulic regulating valve 54 and the wheel cylinders 121 and 122, and in the hydraulic flow path connecting between the fifth hydraulic regulating valve 55 and the wheel cylinders 111 and 112, and may be opened and closed to regulate the hydraulic pressure under the control of the processor 100.

The seventh hydraulic regulating valve 57 is provided in the hydraulic flow path connecting between outlet valves 63 and 64 at the front of the vehicle, the reservoir 80, and the third chamber 40a of the master cylinder 40.

Here, the hydraulic flow path connecting between the fourth hydraulic regulating valve 54 and the wheel cylinders 121 and 122 is connected to the fourth chamber 40b of the master cylinder 40, and guides the hydraulic pressure to the third and fourth wheel cylinders 121 and 122, which are mounted on the two rear wheels RL and RR, respectively.

The hydraulic flow path connecting between the fourth hydraulic regulating valve 54 and the wheel cylinders 121 and 122 may include a second pressure sensor 95 used to measure hydraulic pressure. The second pressure sensor 95 may be deleted to reduce cost.

The hydraulic flow path connecting between the fifth hydraulic regulating valve 55 and the wheel cylinders 111 and 112 is connected to the third chamber 40a of the master cylinder 40, and guides the hydraulic pressure to the first and second wheel cylinders 111 and 112, which are mounted on the two front wheels FL and FR, respectively.

The hydraulic flow path connecting between the fifth hydraulic regulating valve 55 and the wheel cylinders may include a first pressure sensor 90 used to measure hydraulic pressure.

The first to seventh hydraulic regulating valves 51, 52, 53, 54, 55, 56, and 57 described above may be normally operating valves, or may be composed of solenoid valves controlled by the processor 100.

The sixth hydraulic regulating valve 56 (or split shut-off valve) is a line split valve, which may set a string force capable of maintaining a pressure above a certain level in an off-state.

To provide an overview of the ESC-integrated braking system configured as described above, hydraulic pressure may be generated by the pedal cylinder 20 when the driver's pedal effort is applied to the brake pedal 10.

The hydraulic pressure generated by the pedal cylinder 20 is supplied to the piston of the pedal simulator 21 to pressurize the elastic element of the pedal simulator 21, and the driver's pedal feel is implemented by a reaction force of the pressurized elastic element.

The motor 30 may generate braking hydraulic pressure based on signals output from the pedal stroke sensor Su and the pedal cylinder pressure sensor 92, respectively, when the brake pedal 10 is pressurized.

The master cylinder 40 generates braking hydraulic pressure through the master piston 41, which moves back and forth by the motor 30.

The processor 100 may be connected to a memory. The memory may store various data used by the processor 100. The data may include instructions to perform an operation, a step, and the like according to the embodiments of the present disclosure. That is, the memory may store instructions to adjust a position of the master piston 41 of the master cylinder 40 and to control the hydraulic regulating valves based on a required pressure and a circuit pressure of the master cylinder 40.

The memory may include at least one of the following storage media: a flash memory type, a hard disk type, a multimedia card micro type, a card-type memory, a random access memory (RAM), a static random access memory (SRAM), a read-only memory (ROM), a programmable read-only memory (PROM), an erasable programmable read-only memory (EPROM), and an electrically erasable programmable read-only memory (EEPROM).

The processor 100 may execute instructions stored in the memory. By executing instructions stored in the memory, the processor 100 may control at least one other component (e.g., hardware or software component) associated with the processor 100, and may perform various data processing or computations.

In addition, the processor 100 may also be configured separately at the hardware, software, or logic level to perform each function. In this case, dedicated hardware may be employed to perform each function, respectively. To this end, the processor 100 may be implemented in or include at least one of the followings: an application specific integrated circuit (ASIC), a digital signal processor (DSP), programmable logic devices (PLDs), field programmable gate arrays (FPGAs), a central processing unit (CPU), microcontrollers, and/or microprocessors.

The processor 100 may be implemented in a central processing unit (CPU) or a system on chip (SoC), may run an operating system or an application to control a plurality of hardware or software components associated with the processor 100, and may perform various data processing and computations. The processor 100 may be configured to execute at least one instruction stored in the memory and to store the resulting data in the memory.

The processor 100 may perform residual pressure control for the master cylinder 40, depending on whether the master cylinder 40 satisfies a preset residual pressure control condition.

When performing the residual pressure control, the processor 100 may adjust a position of the master piston 41 of the master cylinder 40.

After adjusting the position of the master piston 41, the processor 100 may control the hydraulic regulating valves based on a required pressure and a circuit pressure of the master cylinder 40.

In this process, the processor 100 may determine whether a residual pressure control termination condition is satisfied. If the residual pressure control termination condition is satisfied, the processor 100 may terminate the residual pressure control.

The required pressure of the master cylinder 40 may be a pressure required of the master cylinder 40 based on a driver's pedal effort applied to the brake pedal 10.

The circuit pressure of the master cylinder 40 may be an actual pressure of the master cylinder 40 generated based on a driver's pedal effort applied to the brake pedal 10. The circuit pressure of the master cylinder 40 and pressure of the flow path may be determined to be the same. In this case, the circuit pressure of the master cylinder 40 may be measured through the first pressure sensor 90.

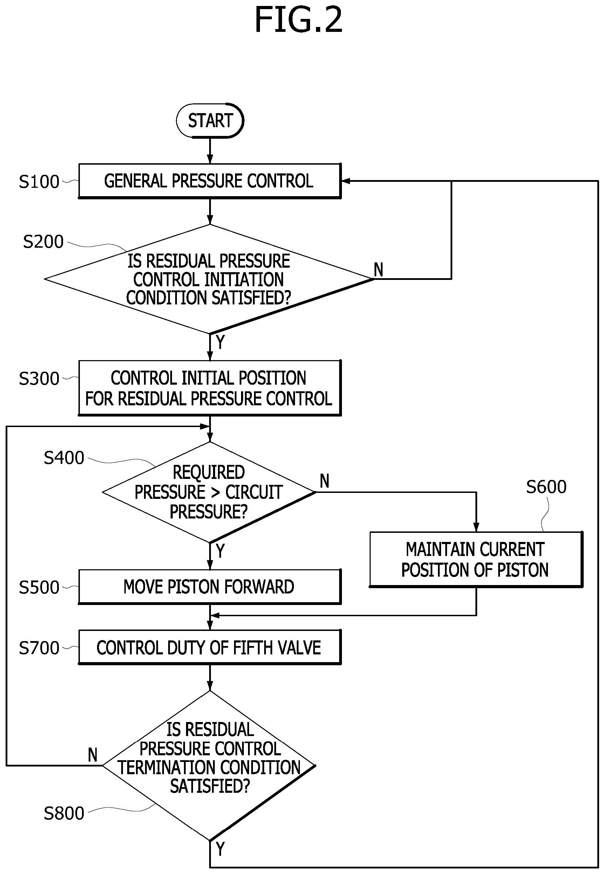

A method for controlling residual pressure in the ESC-integrated braking system according to an embodiment of the present disclosure will be described below with reference to FIG. 2.

FIG. 2 is a flowchart of a method for controlling residual pressure in the ESC-integrated braking system according to an embodiment of the present disclosure.

Referring to FIG. 2, the processor 100 may perform general pressure control for the ESC-integrated braking system (S100).

General pressure control may be an operation mode that implements vehicle braking by controlling hydraulic pressure when a driver pressurizes the brake pedal 10.

In general pressure control, the processor 100 may generate hydraulic pressure through the pedal cylinder 20 when a driver's pedal effort is applied to the brake pedal 10. In this case, the generated hydraulic pressure is supplied to the piston of the pedal simulator 21 to pressurize the elastic element of the pedal simulator 21, and the driver's pedal feel is implemented by a reaction force of the pressurized elastic element.

In order to generate braking hydraulic pressure when the brake pedal 10 is pressurized, the processor 100 may control the motor 30 based on signals output from the pedal stroke sensor Su and the pedal cylinder pressure sensor 92, respectively. In this case, the master piston 41 of the master cylinder 40 may move back and forth to generate braking hydraulic pressure.

The processor 100 may control the hydraulic regulating valves 51, 52, 53, 54, 55, 56, and 57 to control the hydraulic pressure of the hydraulic flow path.

The processor 100 may control the inlet valves 61 to 64 to throttle the hydraulic pressure supplied to the wheel cylinders 111, 112, 121, and 122, respectively.

The processor 100 may control the outlet valves 71, 72, 73, and 74 to throttle the hydraulic pressure discharged from the wheel cylinders 111, 112, 121, and 122, respectively.

In addition, as the general pressure control described above is apparent to those skilled in the art, a detailed description thereof will be omitted herein.

In the process of performing the general pressure control as described above, the processor 100 may determine whether the master cylinder 40 satisfies a preset residual pressure control initiation condition (S200).

The residual pressure control initiation condition may be a condition for determining whether residual pressure has been generated in the ESC-integrated braking system.

The processor 100 may determine whether the residual pressure control initiation condition is satisfied based on a required pressure of the master cylinder 40, a position of the master piston 41, and a circuit pressure of the master cylinder 40. For example, the processor 100 may determine that the residual pressure control initiation condition is satisfied if the required pressure of the master cylinder 40 exceeds a reference value, for example, 0 bar, the position of the master piston 41 is an origin position, and the circuit pressure of the master cylinder 40 exceeds the required pressure.

When the residual pressure control initiation condition is satisfied, the processor 100 may control the motor 30 to control an initial position of the master piston 41 for residual pressure control (S300). That is, the processor 100 may move the initial position of the master piston 41 for residual pressure control to a preset set position.

The set position may be a residual pressure control initiation position of the master piston 41 where the residual pressure control is initiated.

The set position may be, but is not particularly limited to, the origin position of the master piston 41.

When the master piston 41 moves to the set position, the processor 100 may compare the required pressure and the circuit pressure of the master piston 41 to determine whether the required pressure of the master piston 41 exceeds the circuit pressure of the master piston 41 (S400).

If it is determined that the required pressure of the master piston 41 does not exceed the circuit pressure of the master piston 41 in step S400, the processor 100 may maintain a current position of the piston (S600).

If it is determined that the required pressure of the master piston 41 exceeds the circuit pressure of the master piston 41 in step S400, the processor 100 may move the master piston 41 forward (S500) to increase the pressure of the master cylinder 40. In this process, the processor 100 may move the master piston 41 by a preset set distance.

The set distance may be preset for residual pressure control, and the processor 100 may move the master piston 41 in steps by the specified set distance.

As described above, after maintaining the position of the piston at the current position or moving the master piston 41 by the set distance, the processor 100 may control a duty of the fifth hydraulic regulating valve 55 (S700).

More specifically, the processor 100 may first derive a feedforward duty corresponding to the required pressure of the master cylinder 40.

The feedforward duty may be a duty of the fifth hydraulic regulating valve 55 required to generate the required pressure of the master cylinder 40 corresponding to pedal effort of the brake pedal 10.

The processor 100 may compensate for the feedforward duty of the fifth hydraulic regulating valve 55 based on a pressure difference between the required pressure and the circuit pressure of the master cylinder 40. That is, the processor 100 may calculate a pressure difference between the required pressure and the circuit pressure of the master cylinder 40, and derive a pressure feedback control duty set based on the calculated pressure difference.

The pressure feedback control duty may be a duty of the fifth hydraulic regulating valve 55 that is preset to compensate for the feedforward duty of the fifth hydraulic regulating valve 55. The pressure feedback control duty may be set to vary depending on the pressure difference between the required pressure and the circuit pressure of the master cylinder 40.

The processor 100 may sum the pressure feedback control duty with the feedforward duty of the fifth hydraulic regulating valve 55. The processor 100 may then control the fifth hydraulic regulating valve 55 based on a duty obtained by summing the feedforward duty and the pressure feedback control duty of the fifth hydraulic regulating valve 55.

In this process, the processor 100 may determine whether the master cylinder 40 satisfies a residual pressure control termination condition (S800).

The residual pressure control termination condition may be a preset condition to terminate residual pressure control.

Here, the processor 100 may perform general pressure control if displacement of the master piston 41, which enables depressurization in the rear, is achieved by moving the master piston 41 forward. To this end, the processor 100 may terminate the residual pressure control and perform the general pressure control if the required pressure of the master cylinder 40 is at an increased level and the pressure difference between the required pressure and the circuit pressure of the master cylinder 40 exceeds a preset third set value. Alternatively, the processor 100 may terminate the residual pressure control and perform the general pressure control if a pressure difference between an expected pressure, estimated based on the displacement of the master piston 41 of the master cylinder 40, and the circuit pressure of the master cylinder 40 exceeds a fourth set value.

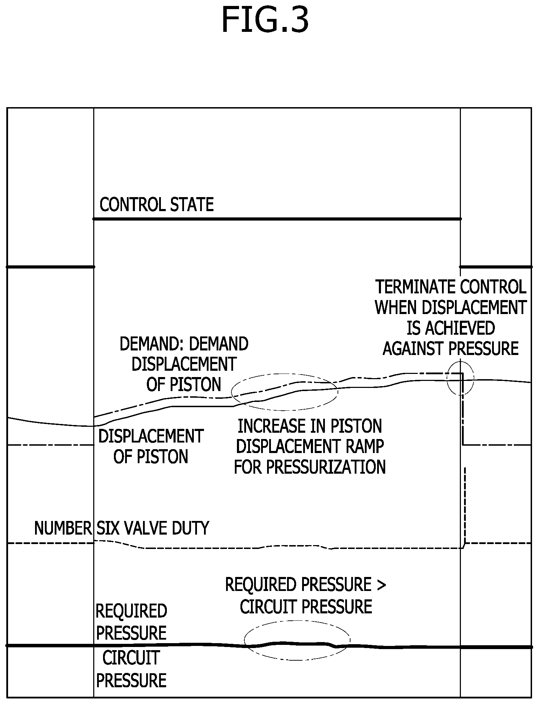

FIG. 3 is a diagram illustrating an effect of the apparatus and the method for controlling residual pressure in the ESC-integrated braking system according to an embodiment of the present disclosure.

Referring to FIG. 3, according to an embodiment of the present disclosure, in a state where the displacement of the master piston 41 is controlled during the residual pressure control so that the required pressure of the master cylinder 40 exceeds the circuit pressure of the master cylinder 40, the fifth hydraulic regulating valve 55 is controlled to ensure that the displacement of the master piston 41 is achieved.

As such, the apparatus and the method for controlling residual pressure in the ESC-integrated braking system according to an embodiment of the present disclosure prevent vehicle brake slippage and reduce operational noise by enhancing pressure control precision when residual pressure occurs in the ESC-integrated braking system.

In addition, the apparatus and the method for controlling residual pressure in the ESC-integrated braking system according to an embodiment of the present disclosure enhance a driver's perceived braking quality and enhances control reliability and stability.

## Claims

1. An apparatus for controlling residual pressure in an electronic stability control (ESC)-integrated braking system, the apparatus comprising:
a master cylinder configured to generate braking hydraulic pressure through a master piston;
hydraulic regulating valves configured to regulate hydraulic pressure, wherein the hydraulic regulating valves are provided in a hydraulic flow path connecting between a reserve and wheel cylinders configured to perform braking of each wheel; and
a processor configured to: control a position of the master piston of the master cylinder depending on whether the master cylinder satisfies a preset residual pressure control initiation condition; and control the hydraulic regulating valves based on a required pressure and a circuit pressure of the master cylinder.

2. The apparatus of claim 1, wherein the processor is configured to determine that the residual pressure control initiation condition is satisfied if the required pressure of the master cylinder exceeds a reference value, the position of the master piston is an origin position, and the circuit pressure of the master cylinder exceeds the required pressure of the master cylinder.

3. The apparatus of claim 1 or 2, wherein the processor is configured to move the position of the master piston to a preset set position.

4. The apparatus of claim 3, wherein the preset set position is an initial position of the master piston.

5. The apparatus of any one of claims 1 to 4, wherein the processor is configured to compare the required pressure and the circuit pressure of the master cylinder and, based on the comparison result, control a position of a piston of the master cylinder.

6. The apparatus of any one of claims 1 to 5, wherein the processor is configured to: move the master cylinder forward if the required pressure of the master cylinder exceeds the circuit pressure of the master cylinder; and maintain the master cylinder at a current position if the required pressure of the master cylinder is at or below the circuit pressure of the master cylinder.

7. The apparatus of any one of claims 1 to 6, wherein:
the hydraulic regulating valves comprise a fifth hydraulic regulating valve provided in a hydraulic flow path connecting between a fourth chamber of the master cylinder and the wheel cylinders and regulate the hydraulic pressure, and
the processor is configured to control the fifth hydraulic regulating valve.

8. The apparatus of any one of claims 1 to 7, wherein the processor is configured to: sum a pressure feedback control duty corresponding to a pressure difference between the required pressure and the circuit pressure of the master cylinder with a feedforward duty corresponding to the required pressure of the master cylinder; and, based on the summed duty, control the fifth hydraulic regulating valve.

9. The apparatus of any one of claims 1 to 8, wherein the processor is configured to terminate the residual pressure control and perform general pressure control if the required pressure of the master cylinder is at an increased level, and a pressure difference between the required pressure and the circuit pressure of the master cylinder is at or above a preset first set value, or if an expected pressure of the master cylinder corresponding to the position of the master piston and the circuit pressure of the master cylinder exceed a preset second set value.

10. A method for controlling residual pressure in an ESC-integrated braking system comprising:
determining, by a processor, whether a master cylinder satisfies a preset residual pressure control condition;
controlling, by the processor, a position of a master piston of the master cylinder depending on the determination result; and
controlling, by the processor, hydraulic regulating valves based on a required pressure and a circuit pressure of the master cylinder.
